# EUROPÄISCHE PATENTSCHRIFT

(11) **EP 1 335 808 B1**
(45) Veröffentlichungstag und Bekanntmachung des Hinweises auf die Patenterteilung: **08.02.2006**
(21) Anmeldenummer: 01971470.8
(22) Anmeldetag: 11.10.2001
(51) Int. Cl.: B23K 9/12, B23K 9/127, G01P 3/80

(54) **ERFASSUNGSELEMENT FÜR EIN SCHWEISSGERÄT**
DETECTING ELEMENT FOR A WELDING DEVICE
ELEMENT DETECTEUR D'UN POSTE DE SOUDURE

(30) Priorität: 02.11.2000 AT 18512000
(43) Veröffentlichungstag der Anmeldung: 20.08.2003
(73) Patentinhaber: Fronius International GmbH, 4643 Pettenbach (AT)
(72) Erfinder: HACKL, Heinrich, A-4551 Ried/Traunkreis (AT); NIEDEREDER, Franz, A-4652 Fischlham (AT); BERNECKER, Günther, A-4611 Buchkirchen (AT)
(74) Vertreter: Secklehner, Günter
(86) Internationale Anmeldenummer: PCT/AT2001/000326
(87) Internationale Veröffentlichungsnummer: WO 2002/036296

(56) Entgegenhaltungen:
- EP-A- 0 157 148
- FR-A- 2 583 882
- US-A- 4 542 279
- US-A- 4 591 689
- US-A- 4 951 218
- US-A- 5 514 851
- KRAMER J ET AL: "PULSE-BASED ANALOG VLSI VELOCITY SENSORS" IEEE TRANSACTIONS ON CIRCUITS AND SYSTEMS II: ANALOG AND DIGITAL SIGNAL PROCESSING, IEEE INC. NEW YORK, US, Bd. 44, Nr. 2, 1. Februar 1997 (1997-02-01), Seiten 86-101, XP000655341 ISSN: 1057-7130

## Beschreibung

Die Erfindung betrifft ein Schweißgerät, wie es im Oberbegriff des Anspruches 1 beschrieben ist sowie ein Verfahren zum Steuern und/oder Regeln eines Schweißgerätes, wie es im Oberbegriff des Anspruches 19 beschrieben ist.

Aus der US 4 591 689 A ist ein System für ein robotergesteuerte Schweißanlage zu entnehmen, bei der der Roboterkopf durch einen Schweißbrenner mit einem Laser und einer optischen Einheit zum Erfassen des reflektierten Laserstrahls gebildet ist. Der Roboterkopf ist dabei über Motoren in unterschiedlichste Positionen verfahrbar, wobei über das berührungslose Meßsystem, also dem Laser und der optischen Einheit, eine Überwachung des Verlaufes der Schweißung in Bezug auf eine Nut bzw. Rinne des Werkstückes erfolgt. Bei einem derartigen berührungslosen Meßsystem mit einem Laser und einer optischen Einheit ist nicht möglich, dass eine Erfassung des Verlaufes bzw. Bewegung auf einer glatten Oberfläche durchgeführt wird. Um eine derartige Bewegung erfassen zu können, ist es notwendig, dass Referenzkanten bzw. Nuten oder Rinnen vorhanden sind, wodurch durch entsprechende Abtastung über den Laserstrahl die Position erfasst werden kann und eine Nachführung möglich ist.

Aus der EP 0 157 148 A ist ein Verfahren zur berührungslosen Messung eines bewegten strukturierten Gegenstandes und eine Messvorrichtung bekannt, bei dem die Oberfläche des strukturierten Gegenstandes mittels einer Videokamera abgetastet wird und mehrere Helligkeitsprofile erstellt werden. Durch Bildung einer Ähnlichkeitsfunktion zwischen den gespeicherten Helligkeitsprofilen wird die Ortsverschiebung des bewegten Gegenstandes während des Zeitabstands zwischen den beiden Videoabtastungen berechnet, wodurch durch Summieren der berechneten Ortsverschiebungen ab einen Startzeitpunkt die Länge erhalten wird. Nachteilig ist hierbei, dass für die Erfassung und Auswertung über eine Videokamera ein entsprechend stark strukturierter Gegenstand notwendig ist und somit eine Anwendung bei nicht strukturierten Gegenständen, insbesondere einem metallischen Gegenstand, meist nicht möglich ist.

Weiters ist aus der US 5 514 851 A ein System zum Erfassen der Bewegung des Schweißdrahts bekannt, bei dem neben dem Werkstück und dem Schweißbrenner weiters ein Rad angeordnet ist, wobei durch Messung der Rotation des Rades die Bewegung und Geschwindigkeit festgestellt werden kann.

Es sind bereits Schweißgeräte bekannt, bei denen mechanische Bewegungen bzw. Bewegungsabläufe, wie die Schweißdrahtförderung oder die Schweißbrennerbewegung, erfaßt werden. Hierzu weisen die Schweißgeräte mechanische Hilfsmittel wie Mitlaufrollen auf, durch die die Bewegungen erfaßt werden. Diesen Mitlaufrollen sind Sensoren zugeordnet, über die die Drehbewegungen der Mitlaufrollen ermittelt werden, woraus anschließend entsprechende Parameter, wie die Geschwindigkeit, die Beschleunigung, der Weg usw., berechnet werden.

Nachteilig ist hierbei, daß durch eine derartige Aufnahme von mechanischen Bewegungen über mechanische Hilfsmittel nur eine indirekte Bewegungsaufnahme stattfindet, sodaß entsprechende Störfaktoren, wie beispielsweise durchrutschende Rollen bzw. Räder, nicht erkannt werden können bzw. diese das Meßergebnis wesentlich verfälschen.

Der Erfindung liegt die Aufgabe zugrunde, ein Schweißgerät zu schaffen, bei dem eine berührungslose Ermittlung bzw. Erfassung einer Bewegung des Schweißbrenner und/oder des Schweißdraht durchgeführt wird.

Diese Aufgabe der Erfindung wird durch ein Schweißgerät nach Anspruch 1 gelöst. Vorteilhaft ist hierbei, daß durch die direkte Messung der mechanischen bzw. manuellen Bewegung, insbesondere des Schweißdrahtes und/oder des Schweißbrenners, tatsächliche Istwerte für die Weiterverarbeitung gebildet werden und somit die Qualität des Schweißergebnisses wesentlich erhöht werden kann. Die Qualität einer Schweißung kann noch weiter gesteigert werden, da die Schweißparameter direkt an die tatsächliche Bewegung, also an die tatsächlichen Istwerte, während eines Schweißprozesses angepaßt werden können. Ein weiterer wesentlicher Vorteil liegt auch darin, daß dadurch Fehlfunktionen des Schweißgerätes, wie das Zurückbrennen des Schweißdrahtes an das Kontaktrohr, vermieden werden können, da die Steuervorrichtung eine Unterbrechung bzw. Reduzierung der Drahtförderung sicher erkennen und somit eine entsprechende Steuerung bzw. Regelung durchführen kann, wodurch eine Zerstörung des Kontaktrohres und gleichzeitig ein Stillstand des Schweißgerätes verhindert wird. Vorteilhaft ist auch, daß durch die berührungslose Erfassung der Bewegung des Schweißdrahtes über das Meßsystem dieses in jedem Schweißgerät ohne großen Aufwand nachgerüstet werden kann, da lediglich für den Einsatz dieses Meßsystems eine Softwareanpassung an der Steuervorrichtung und eine entsprechende einfache Positionierung des Meßsystems vorgenommen werden muß.

Weitere vorteilhafte Ausbildungen sind in den Ansprüchen 2 bis 18 beschrieben. Die sich daraus ergebenden Vorteile sind der Beschreibung zu entnehmen.

Unabhängig davon wird die Aufgabe der Erfindung aber auch durch ein Verfahren zum Steuern und/oder Regeln eines Schweißgerätes nach Anspruch 19 gelöst. Vorteilhaft ist dabei, daß durch den Vergleich der Oberflächenstrukturen eines Gegenstandes nach vorbestimmten Meßzykluszeiten ein Fehler bei der Erfassung von Vorschubbewegungen wirkungsvoll verhindert wird, da keine mechanischen Mittel wie beispielsweise Antriebsrollen zum Einsatz kommen.

Weitere vorteilhafte Maßnahmen sind in den Ansprüchen 20 bis 36 beschrieben. Die sich daraus ergebenden Vorteile sind der Beschreibung zu entnehmen.

Die Erfindung wird anschließend durch Ausführungsbeispiele näher beschrieben.

Es zeigen:
- Fig. 1: eine schematische Darstellung einer Schweißmaschine bzw. eines Schweißgerätes;
- Fig. 2: ein Schaubild einer Schweißdrahtfördervorrichtung für einen Schweißdraht mit einem Meßsystem in vereinfachter, schematischer Darstellung;
- Fig. 3: ein Ausführungsbeispiel für den Einsatz des Meßsystems in einem Schweißgerät in vereinfachter, schematischer Darstellung;
- Fig. 4: ein weiteres Anwendungsbeispiel für den Einsatz des Meßsystems an einem Schweißbrenner in vereinfachter, schematischer Darstellung;
- Fig. 5: eine Draufsicht auf den Schweißbrenner mit dem Meßsystem, gemäß den Schnitten V-V in Fig. 4, in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

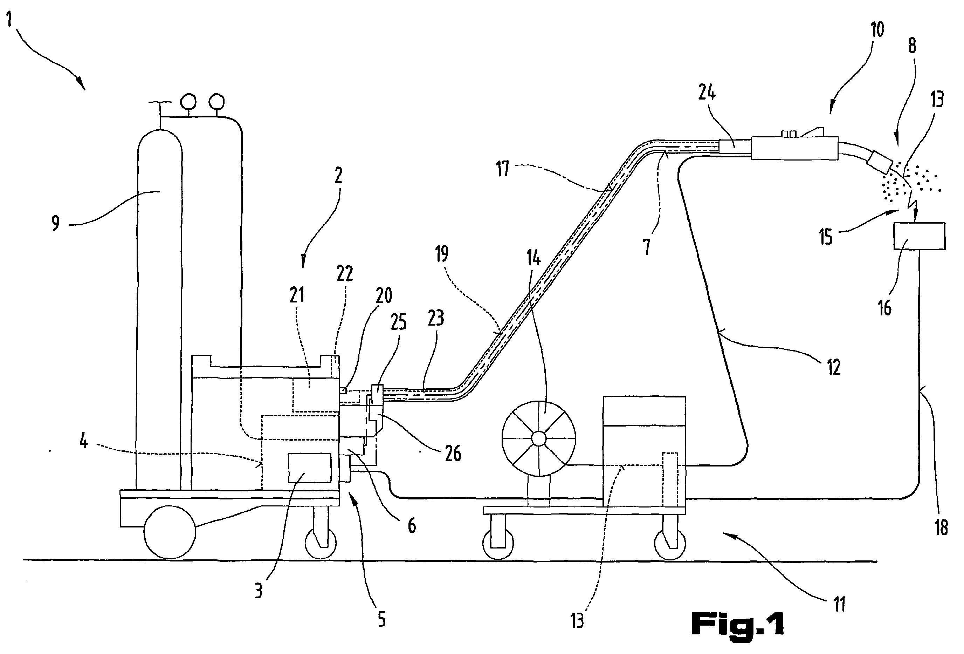

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren usw., gezeigt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Schweißstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Versorgungsleitung 17 vom Leistungsteil 3 der Schweißstromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1, insbesondere mit der Schweißstromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

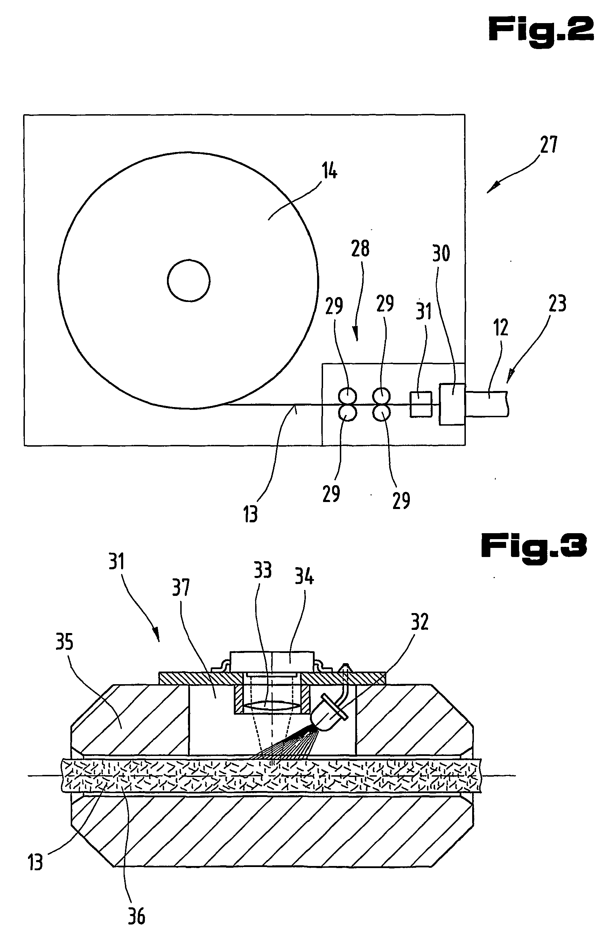

In den Fig. 2 und 3 ist eine Schweißdrahtfördervorrichtung 27 gezeigt, die sowohl in dem externen Drahtvorschubgerät 11, gemäß Fig. 1, als auch im Schweißgerät 1, insbesondere im Gehäuse 26 des Schweißgerätes 1, eingesetzt werden kann.

Der Aufbau der Schweißdrahtfördervorrichtung 27 ist aus dem Stand der Technik bekannt, sodaß auf das Funktionsprinzip nicht mehr näher eingegangen wird. Die Schweißdrahtfördervorrichtung 27 setzt sich aus einem Antriebssystem 28, welches aus Antriebsrädern 29 gebildet ist, und einem Einbindeelement 30 für den Schweißdraht 13 zusammen. Die Antriebsräder 29 werden dabei von zumindest einem Antriebsmotor - nicht dargestellt - angetrieben, sodaß der Schweißdraht 13 von der Vorratstrommel 14 über die Versorgungsleitung 12 bzw. über das Schlauchpaket 23 zum Schweißbrenner 10 gefördert werden kann, wobei über das Einbindeelement 30 der Schweißdraht 13 in die Versorgungsleitung 12 bzw. in das Schlauchpaket 23 eingeführt wird.

Weiters weist die Schweißdrahtfördervorrichtung 27 nunmehr ein neuartiges Meßsystem 31, welches im Detail in Fig. 3 dargestellt ist, für die Überwachung der Schweißdrahtförderung auf, d.h., daß für die Erfassung einer mechanischen Bewegung, insbesondere einer Schweißdrahtbewegung, zumindest eine Vorrichtung bzw. das Meßsystem 31 zur Erfassung einer Oberflächenstruktur angeordnet ist. Das Meßsystem 31 wird bevorzugt zwischen dem Antriebssystem 28 und dem Einbindeelement 30 angeordnet.

Das Meßsystem 31 ist aus einer Lichtquelle 32, insbesondere einer gesteuerten Lichtquelle 32, und einer optischen Empfangsvorrichtung 33 gebildet, wobei die optische Empfangsvorrichtung 33 auf einen Sensor 34 einwirkt, wobei der Sensor 34 eine Rauheit- bzw. eine Oberflächenstruktur eines Gegenstandes, insbesondere des Schweißdrahtes 13, mehrdimensional erfaßt und als digitales Muster abspeichert, d.h., daß durch die gesteuerte Lichtquelle 32 das zu messende Objekt, insbesondere der Schweißdraht 13, so beleuchtet wird, daß die Rauheiten bzw. die Strukturen der Objektoberfläche einen meßbaren Kontrast ergeben. Über die optische Empfangsvorrichtung 33 werden die Rauheiten bzw. Strukturen der Oberfläche aufgenommen und an den Sensor 34 weitergeleitet, wobei dieser das aufgenommene Muster mehrdimensional erfaßt und als digitales Muster speichert.

Nach Ablauf einer vorbestimmten Meßzykluszeit wird erneut eine Erfassung der Oberfläche des Gegenstandes, insbesondere des Schweißdrahtes 13, durchgeführt, wobei über eine Auswertelogik, die im Sensor 34 integriert ist, das zuletzt erfaßte Muster mit dem digital gespeicherten Muster verglichen wird, wobei über die Auswertelogik des Sensors 34 eine Verschiebung der Muster erkannt wird und daraus die Wegstrecke bzw. eine geänderte Position und/oder die Geschwindigkeit der Verschiebung berechnet wird bzw. werden, d.h., daß bei der Auswertung des ersten gespeicherten Musters markante Punkte bzw. Bereiche definiert werden und für diese entsprechende Koordinaten festgelegt werden, worauf nach dem Erfassen des nächsten Musters, welches selbstverständlich ebenfalls gespeichert werden kann, eine Verschiebung des Musters, insbesondere der definierten Punkte bzw. Bereiche, erkannt wird und die sich geänderten Positionen der Koordinaten als Weg kumuliert erfaßt wird. Die sich ergebende kumulierte Wegänderung kann zur Ermittlung der gesamten Wegstrecke verwendet bzw. in einer Tabelle mit Zeitstempel gespeichert werden, sodaß als differentiale Ableitung des Weges über die Zeit sich die Geschwindigkeit des Schweißdrahtes 13 ergibt.

Nachdem eine Auswertung bzw. eine Messung abgeschlossen ist, wird das zuletzt aufgenommene Muster vom Sensor 34 als neues digitales Muster für einen neuerlichen Vergleich mit einem weiteren Muster gespeichert, sodaß eine ständige bzw. kontinuierliche Überwachung der Bewegung des Schweißdrahtes 13 durchgeführt wird. Dadurch ist es möglich, daß mit dem Meßsystem 31 eine Drahtvorschubwegmessung und dessen zeitliche differentielle Ableitungen, wie die Geschwindigkeit und/oder die Beschleunigung und/oder ein Ruck des Schweißdrahtes 13, im Schweißgerät 1 bzw. im Drahtvorschubgerät 11, insbesondere in der Schweißdrahtfördervorrichtung 27, ermittelt werden kann.

Damit kann nunmehr die Geschwindigkeit und die geförderte Menge des Schweißdrahtes 13 als wirklicher Istwert erfaßt werden und nicht, wie aus dem Stand der Technik bisher bekannt, die Erfassung bzw. Überwachung der Bewegung des Schweißdrahtes 13 über auf den Schweißdraht 13 einwirkende Elemente, wie z.B. die Antriebsräder 28, durchgeführt werden, wobei dies beispielsweise durch Aufnahme der Vorschubmotorspannung oder von Vorschubmotorgeberwerten des Antriebssystems 28, insbesondere des Antriebsmotors, oder über einen mechanischen Geber in Form einer Mitlaufrolle erfolgt. Bei diesem System werden mechanische Einflüsse, insbesondere durchrutschende Antriebsräder 29, nicht erkannt, sodaß fehlerhafte Daten bzw. Werte zustande kommen können. D.h., daß bei durchrutschenden Antriebsrädern 29 bzw. durchrutschenden Mitlaufrollen die Istwertaufnahme weiter läuft, wobei jedoch in diesem Zustand keine bzw. eine unterschiedliche Förderung des Schweißdrahtes 13 erfolgt und somit eine fehlerhafte Istwertaufnahme zustande kommt.

Dies ist bei dem Meßsystem 31 nicht der Fall, da die Erfassung direkt von der Bewegung des Schweißdrahtes 13 abhängig ist, sodaß derartige mechanische Einflüsse keine Auswirkungen auf das Meßergebnis haben. Koppelt man das neuartige Meßsystem 31 mit dem aus dem Stand der Technik bekannten System, insbesondere mit der Erfassung der Vorschubmotorspannung und/oder der Vorschubmotorgeberwerte, so können von der Steuervorrichtung 4 diese mechanischen Einflüsse, insbesondere die durchrutschenden Antriebsräder 29, erkannt werden, sodaß eine entsprechende Regelung von der Steuervorrichtung 4 eingeleitet werden kann, um die mechanischen Einflüsse zu verhindern bzw. aufzuheben, d.h., daß die Steuervorrichtung 4 durch die Koppelung der Daten vom Meßsystem 31 mit den Daten des Antriebssystems 28, insbesondere der Vorschubmotorspannung und/oder der Vorschubmotorgeberwerte, das Durchrutschen der Antriebsräder erkennt und entsprechende Steuer bzw. Regelvorgänge einleiten kann.

Damit das Meßsystem 31 die ermittelte Wegstrecke bzw. Position und/oder die Geschwindigkeit weiterleiten kann, ist das Meßsystem 31 über Leitungen, insbesondere über ein Bussystem oder einen Feldbus (in Fig. 3 nicht dargestellt), mit der Steuervorrichtung 4 des Schweißgerätes 1 verbunden. Dadurch kann von der Steuervorrichtung 4 eine entsprechende Steuerung des Antriebssystems 28 oder eine gezielte Anpassung bzw. gezielte Steuerung von Prozeßparametem durchgeführt werden. Beispielsweise ist es dadurch möglich, daß ein Stromimpuls nach einer definierten geförderten Schweißdrahtmenge ausgelöst wird. Dadurch wird erreicht, daß eine Tropfenablösung mit definierter Tropfengröße in Abhängigkeit der Förderstrecke des Schweißdrahtes 13 gebildet werden kann. Weiters können die gelieferten Daten von dem Meßsystem 31 für weitere Auswertungen, wie beispielsweise für die Qualitätskontrolle, herangezogen werden, sodaß beispielsweise für die Qualitätskontrolle sich eine dokumentierbare definierte Menge an Auftragsmaterialeinbringung und Energieeinbringung ergibt.

Um ein derartiges Meßsystem 31 anwenden zu können, ist es lediglich notwendig, daß der Schweißdraht 13 an dem Meßsystem 31 vorbei bewegt wird, wie dies beispielsweise im Detail in Fig. 3 ersichtlich ist. Hierzu ist beispielsweise eine Führungsvorrichtung 35 mit einer für den Schweißdraht 13 angeordneten Führungsbohrung 36 angeordnet. Weiters weist die Führungsvorrichtung 35 eine Öffnung 37, die sich bis zur Führungsbohrung 36 erstreckt, auf, über die das Meßsystem 31 auf den Schweißdraht 13 gerichtet ist, d.h., daß die gesteuerte Lichtquelle 32 sowie die optische Empfangsvorrichtung 33 in Richtung des sich vorbei bewegenden Schweißdrahtes 13 gerichtet sind, sodaß eine entsprechende Beleuchtung des Schweißdrahtes 13 durchgeführt werden kann und somit mit der optischen Empfangsvorrichtung 33 die Rauheiten bzw. Strukturen der Oberfläche des Schweißdrahtes 13, welche schematisch angedeutet sind, aufgenommen werden können und an den Sensor 34 weitergeleitet werden. Durch eine derartige Ausbildung wird erreicht, daß keine Fremdlichtquelle in den Meßbereich der optischen Empfangsvorrichtung 33 einwirken kann, sodaß eine sehr hohe Auflösung erreicht wird. Weiters ist es durch den einfachen Aufbau möglich, daß dieser an einer beliebigen Stelle der Schweißdrahtführung zum Schweißbrenner 13 eingesetzt werden kann.

Selbstverständlich ist jeder beliebige andere Aufbau des Meßsystemes 31 möglich. Dabei ist es auch möglich, daß das Meßsystem 31 ohne zusätzliche Elemente, wie der Führungsvorrichtung 35, eingesetzt werden kann, d.h., daß das Meßsystem 31 nur in einem bestimmten Abstand zu dem zu überwachenden bewegten Gegenstand, insbesondere dem Schweißdraht 13, angeordnet werden muß, um das zuvor beschriebene Meßverfahren durchführen zu können.

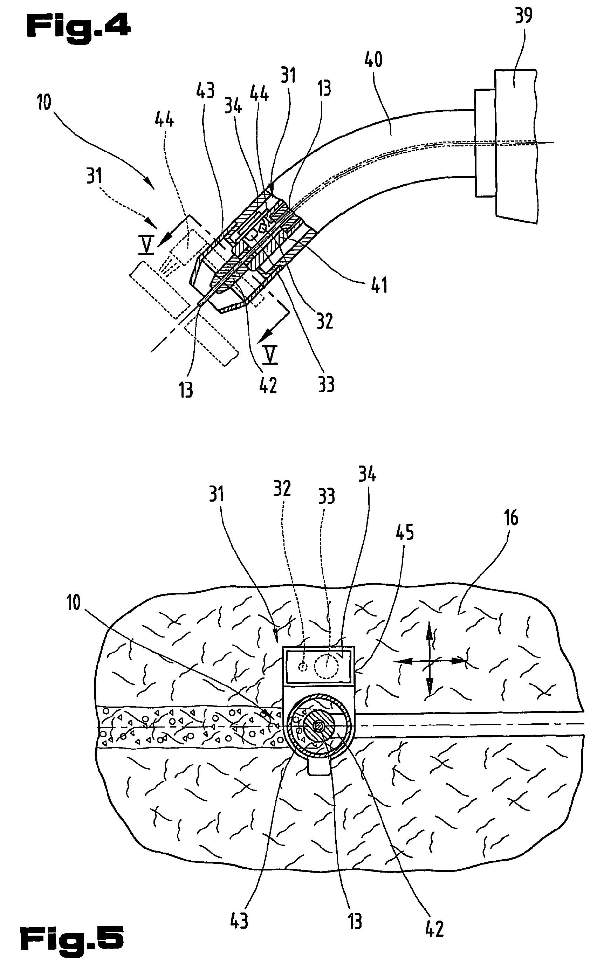

Durch die sehr kleine Bauform und durch die kontaktlose Messung ist auch ein Einbau des Meßsystems 31 in den Schweißbrenner 10 möglich, wie dies in Fig. 4 ersichtlich ist, ohne daß eine Vergrößerung der Abmessungen des Schweißbrenners 10 notwendig ist. Dabei kann jeder beliebige, aus dem Stand der Technik bekannte Schweißbrenner 10 eingesetzt werden, sodaß auf das Funktionsprinzip des Schweißbrenners 10 daher nicht mehr näher eingegangen wird.

Der in Fig. 4 schematisch dargestellte standardmäßige Schweißbrenner 10 wird beispielsweise durch einen Handgriff 39, einen Brennerkörper 40, in dem ein Übergangsstück 41 und ein Kontaktrohr 42 angeordnet sind, sowie einer Gasdüse 43 gebildet. Das Meßsystem 31 wird bevorzugt in der Nähe des Schweißprozesses, also im Bereich des Kontaktrohres 42, angeordnet. Dabei weist das Übergangsstück 41 eine Öffnung 44 auf, über die das Meßsystem 31 wiederum eine Messung der Rauheit bzw. Oberflächenstruktur des Schweißdrahtes 13 durchführen kann.

Durch die kontinuierliche Drahtgeschwindigkeitsmessung in Vorschubrichtung kurz vor dem Kontaktrohr 42 können nunmehr weitere Überwachungsfunktionen bzw. Auswertungen durchgeführt werden. Dabei ist es nunmehr möglich, daß durch die Messung im Schweißbrenner 10 bei einem Vorschubfehler des Schweißdrahtes 13, der beispielsweise durch Spritzer am Kontaktrohr 42, durch einen Knick im Schweißdraht 13 oder durch eine Drahtvorschubkupplung, die durch eine verstopfte Seele rutscht, verursacht wird, ein Rückbrand des aus dem Kontaktrohr 42 austretenden Schweißdrahtes 13 zum Kontaktrohr 42 verhindert werden kann, da die Schweißdrahtbewegung unmittelbar vor dem Kontaktrohr 42 erfaßt wird und somit bei einem Stillstand eine entsprechende Steuerung von der Steuervorrichtung 4 eingeleitet werden kann. Dabei kann beispielsweise die Steuervorrichtung 4 das Schweißgerät 1 stoppen bzw. durch entsprechende Veränderung der Prozeßparameter, wie beispielsweise durch Reduzierung der Leistung, insbesondere auf Null, ein weiteres Abschmelzen des Schweißdrahtes 13 verhindert werden.

Weiters ist es möglich, daß durch die mehrdimensionale Erfassung, insbesondere durch die zweidimensionale Erfassung, bei der neben der Messung in Richtung der Schweißdrahtförderung auch die Messung von rotatorischen bzw. axialen Wegen und Geschwindigkeiten des Gegenstandes bzw. des Schweißdrahtes 13, ein Schlingen und Schlagen des Schweißdrahtes 13 bei der Zuführung zum Kontaktrohr 42 sowie die Zwangskontaktierung im Kontaktrohr 42 überwacht bzw. ermittelt werden kann. Dabei ist es lediglich notwendig, daß entsprechende Koordinaten des Schweißdrahtes 13, welche beispielsweise einmal aufgenommen bzw. festgelegt werden, für eine optimale Zuführung hinterlegt sein müssen, sodaß von der Steuervorrichtung 4 durch einen einfachen Vergleich mit den vom Meßsystem 31 gelieferten Daten eine derartige Überwachung durchgeführt werden kann.

Selbstverständlich ist es möglich, daß das Meßsystem 31 auch für andere Erfassungen bzw. Ermittlungen von Bewegungsabläufen eingesetzt werden kann. Hierzu ist es beispielsweise möglich, daß das Meßsystem 31 im Antriebssystem 28, also bei den Antriebsrädern 29, eingesetzt wird, sodaß die Drehbewegung der Antriebsräder 29 festgestellt wird und gleichzeitig der Drehweg ermittelt werden kann.

Das Meßsystem 31 kann auch für andere Überwachungsfunktionen als die Ermittlung von Bewegungen eingesetzt werden, wobei es beispielsweise möglich ist, daß das Meßsystem 31 eine Erkennung bzw. Überwachung von Zunder bzw. Rost oder einem Material des Schweißdrahtes 13 über den Kontrast durchführt. Dabei kann beispielsweise der Kontrast für die Bilderfassung als Meßwert verwendet werden, d.h., daß durch die Ansteuerung der Lichtquelle 32 entsprechend der Ansteuerspannung bzw. des Ansteuerstromes ein Istwert festgelegt bzw. generiert wird, der weiterverarbeitet werden kann. Eine derartige Überwachungsfunktion über den Kontrast kann beispielsweise für die Ermittlung des Zustandes des Schweißdrahtes 13, insbesondere zur Erkennung von Zunder bzw. Rost oder dem Material bzw. der Zusammensetzung des Schweißdrahtes 13, eingesetzt werden. Dabei wird für die Ansteuerung der Lichtquelle 32 ein oberer und unterer Grenzwert festgelegt, sodaß durch einen Vergleich mit der tatsächlichen Ansteuerung der Lichtquelle 32 zur Bildung eines bestimmten Kontrastes eine zu hohe Verschmutzung bzw. eine falsch eingestellte Legierung erkannt werden kann. Damit unterschiedliche Legierungen erkannt werden können, ist es möglich, daß für die unterschiedlichen Schweißdrähte 13 unterschiedliche obere und untere Grenzwerte gespeichert sind, wobei je nach Einstellung über die Ein- und/oder Ausgabevorrichtung 22 (in Fig. 4 nicht dargestellt) die entsprechenden Grenzwerte festgelegt bzw. ausgewählt werden.

Weiters ist es auch möglich, daß eine Feststellung von Beschädigungen, wie Riefen, im Schweißdraht 13 festgestellt werden können. Dabei kann anschließend eine entsprechende Regelung bzw. Steuerung vorgenommen werden. Werden beispielsweise sogenannte Riefen vom Meßsystem 31 bzw. von der Steuervorrichtung 4 festgestellt, so kann der Anpreßdruck der Antriebsräder 29 auf den Schweißdraht 13 minimiert werden, wodurch derartige Beschädigungen beseitigt werden können. Dadurch wird eine verbesserte Drahtförderung für den Schweißdraht 13 erreicht.

Ein wesentlicher Vorteil des Meßsystems 31 liegt vor allem darin, daß durch die berührungslose Erfassung ein Nachrüsten bei jeder Anlage bzw. bei roboterunterstützten Anwendungen sehr einfach möglich ist, da keine großen mechanischen Änderungen der bereits bestehenden Anlage durchgeführt werden müssen.

Weiters ist auch eine Anwendung für weitere Bewegungsabläufe möglich. Hierzu ist in Fig. 5 ein Schweißbrenner 10 für eine Schweißbrennerbewegungswegmessung und dessen zeitliche Ableitungen, wie der Beschleunigung, der Geschwindigkeit usw., über dem Werkstück 16 dargestellt, d.h., daß die Bewegung des Schweißbrenners 10 zum Werkstück 16 berührungslos über das Meßsystem 31 erfaßt und ausgewertet wird.

Hierzu ist das Meßsystem 31 nunmehr nicht nur auf die Oberfläche des Schweißdrahtes 13 gerichtet, sondern wird am Schweißbrenner 13 derartig angeordnet, daß eine Lichtquelle 32 und eine optische Empfangsvorrichtung 33 bei einem Schweißprozeß auch auf die Oberfläche des Werkstückes 16 gerichtet ist. Dies ist in Fig. 4 mit strichlierten Linien schematisch angedeutet, wogegen in Fig. 5 eine Draufsicht gemäß eines Schnittes V-V in Fig. 4 ersichtlich ist.

Der Aufbau bzw. die Befestigung des Meßsystems 31 kann beliebig erfolgen, sodaß in dem gezeigten Ausführungsbeispiel nur eine schematische Darstellung gezeigt ist, bei dem das Meßsystem 31 über ein Gehäuse 45 an der Gasdüse 43 befestigt ist. Selbstverständlich ist es möglich, daß das Meßsystem 31 auch anderswo am Schweißbrenner 10, wie beispielsweise am Brennerkörper 40 oder innerhalb der Gasdüse 43, angeordnet werden kann, wobei nur sichergestellt sein muß, daß die Lichtquelle 32 und die optische Empfangsvorrichtung 33 direkt auf die Oberfläche des Werkstückes 16 gerichtet ist.

Durch den Einsatz des Meßsystems 31 zur Erfassung bzw. Messung der Oberfläche des Werkstückes 16 wird nunmehr erreicht, daß auch die Bewegung des gesamten Schweißbrenners 13 in bezug auf das Werkstück 16 erfaßt und ausgewertet werden kann, wie dies zuvor für eine Schweißdrahtbewegung beschrieben wurde. Dadurch wird auch eine einfache Anwendung für einen Handschweißbrenner erreicht, ohne daß sich dadurch das Gewicht und/oder die Flexibilität des Schweißbrenners 10 wesentlich verändert.

Bei einer Handschweißung bzw. einer Roboterschweißung kann nunmehr der Schweißgeschwindigkeits- und der Wegistwert in einfacher Form ermittelt werden, sodaß von der Steuervorrichtung 4 eine Anpassung der Schweißparameter für einen Schweißprozeß auch automatisch durchgeführt werden kann und somit die Qualität wesentlich erhöht wird. Dabei ist es z.B. möglich, daß die Einbrandtiefe durch eine entsprechende Regelung konstant gehalten werden kann. Weiters ist es möglich, daß eine Regelung auf eine konstante bzw. voreingestellte Schweißgeschwindigkeit durchgeführt wird, wobei hierzu von der Steuervorrichtung 4 entsprechende optische und/oder akustische bzw. elektronische Signale für den Benützer oder einer weiteren Steuervorrichtung zum Anpassen der Schweißgeschwindigkeit erzeugt werden, sodaß bei Abweichung von einer voreingestellten Schweißgeschwindigkeit der Benutzer bzw. der Roboter entsprechend reagieren kann.

So ist es möglich, daß eine Kombination für interne und externe Wegmeßerfassungen, also der Ausführungen nach den Fig. 2 bis 5, durchgeführt wird, wodurch sich wiederum mehrere Auswertemöglichkeiten ergeben. Dabei ist es möglich, daß durch eine entsprechende Protokollierung der Meßergebnisse die Schweißnahtlänge, die Materialaufbringung und weiters durch die Maschinenparameter die Energie und Stromeinbringung erfaßt bzw. ausgewertet werden kann.

Durch den Einsatz des Meßsystems 31 ergibt sich für den Benutzer bzw. Schweißer eine automatische Schweißparametervorgabe, d.h., daß beispielsweise beim Stillstand des Schweißbrenners 13 die Schweißung auf eine Schweißgeschwindigkeit von 0 cm/min erfaßt wird, sodaß von der Steuervorrichtung 4 ein Sollwert für die Schweißleistung von Null vorgegeben wird und gleichzeitig beispielsweise der Drahtvorschub, falls erforderlich, gestoppt bzw. reduziert werden kann. Dadurch kann die Leistung des Schweißgerätes 1 in Abhängigkeit der Schweißgeschwindigkeit vorgegeben und entsprechend geregelt werden.

Der Ordnung halber sei abschließend darauf hingewiesen, daß zum besseren Verständnis des Schweißgerätes 1 dieses bzw. dessen Bestandteile teilweise unmaßstäblich und/oder vergrößert und/oder verkleinert dargestellt wurden.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Schweißdrahtfördervorrichtung
- 28: Antriebssystem
- 29: Antriebsrad
- 30: Einbindeelement

- 31: Meßsystem
- 32: Lichtquelle
- 33: Empfangsvorrichtung
- 34: Sensor
- 35: Führungsvorrichtung

- 36: Führungsbohrung
- 37: Öffnung
- 38:
- 39: Handgriff
- 40: Brennerkörper

- 41: Übergangsstück
- 42: Kontaktrohr
- 43: Gasdüse
- 44: Öffnung
- 45: Gehäuse

## Patentansprüche

1. Schweißgerät (1), welches eine Stromquelle (2) zur Bereitstellung elektrischer Energie an zumindest einer Elektrode an einem Schweißbrenner (10) und eine der Stromquelle (2) zugeordnete Steuervorrichtung (4), der eine Eingabevorrichtung zur Einstellung unterschiedlicher Schweißparameter zugeordnet ist, aufweist, wobei zur Erfassung verschiedener Istwerte eines Schweißprozesses mehrere Erfassungsmittel angeordnet sind und ein Meßsystem (31) im Schweißbrenner (10), insbesondere vor einem Kontaktrohr (42), angeordnet ist und/oder ein Meßsystem (31) zwischen einem Antriebssystem (28) zur Schweißdrahtförderung und einem Einbindeelement (30) für eine Versorgungsleitung (12) bzw. ein Schlauchpaket (23) angeordnet ist **dadurch gekennzeichnet, dass** das Meßsystem (31) aus einer Lichtquelle (32), insbesondere einer gesteuerten Lichtquelle (32) und einer optischen Empfangsvorrichtung (33), welche auf einen Sensor (34) einwirkt, besteht und das Meßsystem (31) zur Erfassung einer Oberflächenstruktur eines Schweißdrahtes (13) für die Erfassung einer Schweißdrahtbewegung ausgebildet ist, wobei der Sensor (34) eine Rauheit bzw. eine Oberflächenstruktur des Schweißdrahtes (13) mehrdimensional erfaßt und als digitales Muster abspeichert und das Meßsystem (31) zur neuerlichen Erfassung der Oberfläche des Schweißdrahtes (13) nach Ablauf einer vorbestimmten Meßzykluszeit ausgebildet ist, wobei eine Auswertelogik zum Vergleich des zuletzt erfaßten Musters mit dem digital gespeicherten Muster vorgesehen ist und die Auswertelogik zum Erkennen einer Verschiebung der Muster und zum Berechnen einer Wegstrecke bzw. einer geänderten Position und/oder einer Geschwindigkeit des Schweißdrahtes ausgebildet ist.

2. Schweißgerät nach Anspruch 1, **dadurch gekennzeichnet, daß** die gesteuerte Lichtquelle (32) derart angeordnet ist, daß eine Beleuchtung der Rauheiten bzw. der Strukturen der Oberfläche des Gegenstandes einen meßbaren Kontrast ergibt.

3. Schweißgerät nach Anspruch 1 oder 2, **dadurch gekennzeichnet, daß** der Sensor (34), insbesondere die Auswertelogik, bei der Auswertung des ersten gespeicherten Musters markante Punkte bzw. Bereiche definiert und für diese entsprechende Koordinaten festlegt, worauf dieser nach dem Erfassen des nächsten Musters eine Verschiebung des Musters, insbesondere der definierten Punkte bzw. Bereiche, erkennt und die sich geänderten Positionen der Koordinaten als Weg kumuliert erfaßt.

4. Schweißgerät nach einem oder mehreren der vorhergehenden Ansprüche, **dadurch gekennzeichnet, daß** der Sensor (34), insbesondere die Auswertelogik, zur Ermittlung einer gesamten Wegstrecke aus den sich ergebenden kumulierten Wegänderungen bzw. zur Speicherung der sich ergebenden kumulierten Wegänderungen in einer Tabelle mit Zeitstempel ausgebildet ist.

5. Schweißgerät nach einem oder mehreren der vorhergehenden Ansprüche, **dadurch gekennzeichnet, daß** der Sensor (34), insbesondere die Auswertelogik, zum Erfassen der Geschwindigkeit und der geförderten Menge des Schweißdrahtes (13) als wirklichen bzw. tatsächlichen Istwert ausgebildet ist.

6. Schweißgerät nach einem oder mehreren der vorhergehenden Ansprüche, **dadurch gekennzeichnet, daß** das Meßsystem (31) zur Weiterleitung der ermittelten Wegstrecke bzw. Position und/oder der Geschwindigkeit des überwachten Gegenstandes über Leitungen, insbesondere über einen Feldbus, mit der Steuervorrichtung (4) des Schweißgerätes (1) verbunden ist.

7. Schweißgerät nach einem oder mehreren der vorhergehenden Ansprüche, **dadurch gekennzeichnet, daß** das Meßsystem (31) zur Durchführung einer Drahtvorschubwegmessung und zur Berechnung deren zeitlich differentiellen Ableitungen, wie beispielsweise eine Geschwindigkeit, und/oder eine Beschleunigung und/oder einen Ruck des Schweißdrahtes (13), ausgebildet ist.

8. Schweißgerät nach einem oder mehreren der vorhergehenden Ansprüche, **dadurch gekennzeichnet, daß** das Meßsystem (31) auch zur Durchführung einer Schweißbrennerbewegungs-wegmessung und zur Berechnung deren zeitlicher Ableitungen, wie beispielsweise eine Geschwindigkeit und/oder eine Beschleunigung und/oder einen Ruck des Schweißbrenners (10) über dem Werkstück (16), ausgebildet ist.

9. Schweißgerät nach einem oder mehreren der vorhergehenden Ansprüche, **dadurch gekennzeichnet, daß** die Steuervorrichtung (4) des Schweißgerätes (1) zur Ermittlung bzw. Berechnung der tatsächlich geförderten Menge an Schweißdraht (13) durch die vom Meßsystem (31) übergebenen Daten ausgebildet ist.

10. Schweißgerät nach einem oder mehreren der vorhergehenden Ansprüche, **dadurch gekennzeichnet, daß** die Steuervorrichtung (4) eine Anpassung zumindest eines Schweißparameters während eines Schweißprozesses aufgrund der Daten des Meßsystems (31) durchführt bzw. vornimmt.

11. Schweißgerät nach einem oder mehreren der vorhergehenden Ansprüche, **dadurch gekennzeichnet, daß** die Steuervorrichtung (4) so ausgebildet ist, daß diese ein Durchrutschen der Antriebsräder (28) durch eine Koppelung der Daten vom Meßsystem (31) mit den Daten des Antriebssystems (28), insbesondere der Vorschubmotorspannung und/oder der Vorschubmotorgeberwerte, erkennt.

12. Schweißgerät nach einem oder mehreren der vorhergehenden Ansprüche, **dadurch gekennzeichnet, daß** das Meßsystem (31) zur Überwachung bzw. Ermittlung eines Schlingens und Schlagens des Schweißdrahtes (13) bei der Zuführung zum Kontaktrohr (42) sowie einer Zwangskontaktierung im Kontaktrohr (42) ausgebildet ist.

13. Schweißgerät nach einem oder mehreren der vorhergehenden Ansprüche, **dadurch gekennzeichnet, daß** das Meßsystem (31), insbesondere die Auswertelogik, zu einer Überwachung des Kontrastes für die Erkennung von Zunder bzw. Rost oder einem Material des Schweißdrahtes (13) ausgebildet ist.

14. Schweißgerät nach einem oder mehreren der vorhergehenden Ansprüche, **dadurch gekennzeichnet, daß** eine Führungsvorrichtung (35) eine Führungsbohrung (36) für den Schweißdraht (13) aufweist.

15. Schweißgerät nach einem oder mehreren der vorhergehenden Ansprüche, **dadurch gekennzeichnet, daß** die Führungsvorrichtung (35) eine Öffnung (37), die sich bis zur Führungsbohrung (36) erstreckt, aufweist, über die das Meßsystem (31) auf den Schweißdraht (13) gerichtet ist.

16. Schweißgerät nach einem oder mehreren der vorhergehenden Ansprüche, **dadurch gekennzeichnet, daß** die gesteuerte Lichtquelle (32) sowie die optische Empfangsvorrichtung (33) in Richtung des sich vorbeibewegenden Schweißdrahtes (13) gerichtet sind.

17. Schweißgerät nach einem oder mehreren der vorhergehenden Ansprüche, **dadurch gekennzeichnet, daß** das Meßsystem (31) auch zur berührungslosen Erfassung und Auswertung der Bewegung des Schweißbrenners (10) zum Werkstück (16) ausgebildet ist.

18. Schweißgerät nach einem oder mehreren der vorhergehenden Ansprüche, **dadurch gekennzeichnet, daß** das Meßsystem (31) derart am Schweißbrenner (13) angeordnet ist, daß eine Lichtquelle und eine optische Empfangsvorrichtung bei einem Schweißprozeß auch auf die Oberfläche des Werkstückes (16) gerichtet sind.

19. Verfahren zum Steuern und/oder Regeln eines Schweißgerätes, wobei durch mehrere Erfassungsmittel verschiedene Istwerte eines Schweißprozesses erfaßt werden und über ein Meßsystem im Schweißbrenner, insbesondere vor einem Kontaktrohr, und/oder über ein Meßsystem zwischen einem Antriebssystem zur Schweißdrahtförderung und einem Einbindeelement für eine Versorgungsleitung bzw. ein Schlauchpaket, eine Schweißdrahtbewegung erfaßt wird und die erfassten Istwerte und die erfasste Schweißdrahtbewegung zur Steuerung und/oder Regelung des Schweißprozesses herangezogen werden **dadurch gekennzeichnet, daß** eine Erfassung der Schweißdrahtbewegung derart erfolgt, daß von dem Meßsystem eine Erfassung und eine Speicherung einer Oberflächenstruktur des Schweißdrahtes vorgenommen wird, worauf nach einer vorbestimmten Meßzykluszeit eine neuerliche Erfassung der Oberflächenstruktur des Schweißdrahtes durchgeführt wird und anschließend über eine Auswertelogik des Meßsystems die erfaßten Oberflächenstrukturen verglichen werden und eine entsprechende Verschiebung der Oberflächenstrukturen erkannt bzw. ermittelt wird, worauf ein Berechnen einer Wegstrecke bzw. einer geänderten Position und/oder einer Geschwindigkeit des Schweißdrahtes durchgeführt wird.

20. Verfahren nach Anspruch 19, **dadurch gekennzeichnet, daß** die Erfassung der Vorschubbewegung durch das Meßsystem durchgeführt wird, wobei über eine optische Empfangsvorrichtung auf einen Sensor eingewirkt wird, von welchem eine Rauheit bzw. die Oberflächenstruktur des Gegenstandes, insbesondere des Werkstückes und/oder des Schweißdrahtes, mehrdimensional erfaßt und als digitales Muster abspeichert wird, wobei hierzu von einer Lichtquelle des Meßsystemes, insbesondere einer gesteuerten Lichtquelle, der Gegenstand, insbesondere der Schweißdraht und/oder das Werkstück, beleuchtet wird.

21. Verfahren nach Anspruch 19 oder 20, **dadurch gekennzeichnet, daß** durch das Meßsystem nach Ablauf einer vorbestimmten Meßzykluszeit erneut eine Erfassung der Oberflächenstruktur des Gegenstandes, insbesondere des Werkstückes und/oder des Schweißdrahtes durchgeführt wird, wobei von einer Auswertelogik im Sensor ein zuletzt erfaßtes Muster mit einem digital gespeicherten Muster verglichen, eine Verschiebung der Muster erkannt und daraus die Wegstrecke bzw. eine geänderte Position und/oder eine Geschwindigkeit der Verschiebung der Muster berechnet wird.

22. Verfahren nach einem oder mehreren der Ansprüche 19 bis 21, **dadurch gekennzeichnet, daß** der zu messende Gegenstand, insbesondere der Schweißdraht und/oder das Werkstück, von der gesteuerten Lichtquelle so beleuchtet wird, daß die Rauheiten bzw. die Strukturen der Oberfläche des Gegenstandes einen meßbaren Kontrast ergeben.

23. Verfahren nach einem oder mehreren der Ansprüche 19 bis 22, **dadurch gekennzeichnet, daß** durch den Sensor bei der Auswertung des ersten gespeicherten Musters markante Punkte bzw. Bereiche definiert und für diese entsprechende Koordinaten festgelegt werden, worauf nach dem Erfassen des nächsten Musters das Meßsystem eine Verschiebung des Musters, insbesondere der definierten Punkte bzw. Bereiche erkennt und die sich geänderten Positionen der Koordinaten als Weg kumuliert erfaßt werden.

24. Verfahren nach einem oder mehreren der Ansprüche 19 bis 23, **dadurch gekennzeichnet, daß** die sich ergebende kumulierte Wegänderung zur Ermittlung der gesamten Wegstrecke verwendet bzw. in einer Tabelle mit Zeitstempel gespeichert wird.

25. Verfahren nach einem oder mehreren der Ansprüche 19 bis 24, **dadurch gekennzeichnet, daß** die Geschwindigkeit und die geförderte Menge des Schweißdrahtes als wirklichen bzw. tatsächlichen Istwert erfaßt wird.

26. Verfahren nach einem oder mehreren der Ansprüche 19 bis 25, **dadurch gekennzeichnet, daß** die ermittelte Wegstrecke bzw. Position und/oder die Geschwindigkeit des überwachten Gegenstandes durch das Meßsystem über Leitungen, insbesondere über einen Feldbus, an die Steuervorrichtung des Schweißgerätes weitergeleitet werden.

27. Verfahren nach einem oder mehreren der Ansprüche 19 bis 26, **dadurch gekennzeichnet, daß** eine Drahtvorschubwegmessung und deren zeitliche differentielle Ableitungen, wie beispielsweise eine Geschwindigkeit, eine Beschleunigung oder ein Ruck des Schweißdrahtes, durch das Meßsystem durchgeführt bzw. errechnet werden.

28. Verfahren nach einem oder mehreren der Ansprüche 19 bis 27, **dadurch gekennzeichnet, daß** auch eine Schweißbrennerbewegungswegmessung und deren zeitliche Ableitungen, wie beispielsweise eine Geschwindigkeit, eine Beschleunigung oder ein Ruck des Schweißbrenners, über dem Werkstück durch das Meßsystem durchgeführt bzw. errechnet werden.

29. Verfahren nach einem oder mehreren der Ansprüche 19 bis 28, **dadurch gekennzeichnet, daß** mittels der übergebenen Daten des Meßsystemes die tatsächlich geförderte Menge des Schweißdrahtes durch die Steuervorrichtung des Schweißgerätes ermittelt bzw. berechnet wird.

30. Verfahren nach einem oder mehreren der Ansprüche 19 bis 29, **dadurch gekennzeichnet, daß** aufgrund der Daten des Meßsystemes eine Anpassung der Schweißparameter während eines Schweißprozesses durch die Steuervorrichtung durchgeführt bzw. vorgenommen wird.

31. Verfahren nach einem oder mehreren der Ansprüche 19 bis 30, **dadurch gekennzeichnet, daß** durch die Koppelung der Daten vom Meßsystem mit den Daten des Antriebssystems, insbesondere der Vorschubmotorspannung und/oder der Vorschubmotorgeberwerte, das Durchrutschen der Antriebsräder von der Steuervorrichtung erkannt wird.

32. Verfahren nach einem oder mehreren der Ansprüche 19 bis 31, **dadurch gekennzeichnet, daß** ein Schlingen und Schlagen des Schweißdrahtes bei der Zuführung zum Kontaktrohr sowie die Zwangskontaktierung im Kontaktrohr durch das Meßsystem überwacht bzw. ermittelt wird.

33. Verfahren nach einem oder mehreren der Ansprüche 19 bis 32, **dadurch gekennzeichnet, daß** eine Überwachung des Kontrastes für die Erkennung von Zunder bzw. Rost oder einem Material des Schweißdrahtes durch das Meßsystem durchgeführt wird.

34. Verfahren nach einem oder mehreren der Ansprüche 19 bis 33, **dadurch gekennzeichnet, daß** die gesteuerte Lichtquelle sowie die optische Empfangsvorrichtung in Richtung des sich vorbeibewegenden Schweißdrahtes gerichtet werden.

35. Verfahren nach einem oder mehreren der Ansprüche 19 bis 34, **dadurch gekennzeichnet, daß** die Bewegung des Schweißbrenners zum Werkstück berührungslos durch das Meßsystem erfaßt und ausgewertet wird.

36. Verfahren nach einem oder mehreren der Ansprüche 19 bis 35, **dadurch gekennzeichnet, daß** das Meßsystem, eine Lichtquelle und eine optische Empfangsvorrichtung bei einem Schweißprozeß auch auf die Oberfläche des Werkstückes gerichtet werden.

## Claims

1. Welding apparatus (1), having a current source (2) for supplying electrical power to at least one electrode at a welding torch (10) and a control system (4) co-operating with the current source (2), linked to an input device for entering settings for different welding parameters, several sensing means being provided for detecting various actual values of a welding process, a measuring system (31) being disposed in the welding torch (10), in particular upstream of a contact pipe (42) and/or a measuring system (31) being disposed between a drive system (28) for the welding wire feed and a linking element (30) for a supply line (12) or a hose pack (23), **characterised in that** the measuring system (31) consists of a light source (32), in particular a controlled light source (32), and an optical receiver (33), which acts on a sensor (34), and the measuring system (31) is programmed to detect a surface structure of a welding wire (13) in order to sense a welding wire displacement, whereby the sensor (34) detects a roughness or a surface structure of the welding wire (13) in multiple dimensions and stores it as a digital pattern, and the measuring system (31) is programmed to detect the surface of the welding wire (13) again after a pre-set measuring cycle time has elapsed and an evaluation logic compares the last detected pattern with the digitally stored pattern and the evaluation logic is programmed to detect a shift in the pattern and calculate a distance of travel or a changed position and/or the speed of the welding wire.

2. Welding apparatus as claimed in claim 1, **characterised in that** the controlled light source (32) is disposed so as to produce a measurable contrast when the roughness or surface structures of the object are illuminated.

3. Welding apparatus as claimed in claim 1 or 2, **characterised in that** the sensor (34), in particular the evaluation logic, defines distinctive points or regions when evaluating the first stored pattern and fixes coordinates corresponding to them, and, when it detects the next pattern, recognises a shift in the pattern, in particular of the distinctive points or regions, and cumulates the altered positions of the coordinates to ascertain a travel path.

4. Welding apparatus as claimed in one or more of the preceding claims, **characterised in that** the sensor (34), in particular the evaluation logic, is programmed to determine an entire travel path from the resultant cumulated changes in travel and to store the resultant cumulated travel changes in a table with a time stamp.

5. Welding apparatus as claimed in one or more of the preceding claims, **characterised in that** the sensor (34), in particular the evaluation logic, is programmed to detect the speed and conveyed quantity of welding wire (13) as an instantaneous and effective actual value

6. Welding apparatus as claimed in one or more of the preceding claims, **characterised in that** the measuring system (31) is connected via lines, in particular via a field bus, to the control system (4) of the welding apparatus (1) in order to transmit the detected travel paths or position and/or the speed of the monitored object.

7. Welding apparatus as claimed in one or more of the preceding claims, **characterised in that** the measuring system (31) is programmed to take a wire feed distance measurement and to calculate derived values based on a time differential such as a speed and/or an acceleration and/or a jolt of the welding wire (13).

8. Welding apparatus as claimed in one or more of the preceding claims, **characterised in that** the measuring system (31) is also programmed to take a measurement of the welding torch movement and to calculate derived values based on a time differential such as a speed and/or an acceleration and/or a jolt of the welding torch (10) above the workpiece (16).

9. Welding apparatus as claimed in one or more of the preceding claims, **characterised in that** the control system (4) of the welding apparatus (1) is programmed to detect and calculate the actual quantity of welding wire (13) displaced on the basis of the data transmitted by the measuring system (31).

10. Welding apparatus as claimed in one or more of the preceding claims, **characterised in that** the control system (4) applies a correction to at least one welding parameter during a welding process on the basis of the data of the measuring system (31).

11. Welding apparatus as claimed in one or more of the preceding claims, **characterised in that** the control system (4) is programmed to detect any slipping in the driving gears (28) by correlating data from the measuring system (31) with data of the drive system (28), in particular the feed motor voltage and/or the feed motor transmitter values.

12. Welding apparatus as claimed in one or more of the preceding claims, **characterised in that** the measuring system (31) is programmed to monitor and detect any twisting or impact of the welding wire (13) as it is fed to the contact pipe (42) and a forced contact made in the contact pipe (42).

13. Welding apparatus as claimed in one or more of the preceding claims, **characterised in that** the measuring system (31), in particular the evaluation unit, is programmed to monitor contrast for the purpose of detecting flaking or rust or a material of the welding wire (13).

14. Welding apparatus as claimed in one or more of the preceding claims, **characterised in that** a guide mechanism (35) has a guide bore (36) for the welding wire (13).

15. Welding apparatus as claimed in one or more of the preceding claims, **characterised in that** the guide mechanism (35) has an orifice (37) extending as far as the guide bore (36), by means of which the measuring system (31) is directed onto the welding wire (13).

16. Welding apparatus as claimed in one or more of the preceding claims, **characterised in that** the controlled light source (32) and the optical receiver (33) are oriented in the direction of the welding wire (13) as it is fed past.

17. Welding apparatus as claimed in one or more of the preceding claims, **characterised in that** the measuring system (31) is also programmed to contactlessly sense and evaluate the motion of the welding torch (10) towards the workpiece (16).

18. Welding apparatus as claimed in one or more of the preceding claims, **characterised in that** the measuring system (31) is disposed on the welding torch (10) so that a light source and an optical receiver are also directed at the surface of the workpiece (16) during a welding process.

19. Method of controlling and/or regulating a welding apparatus, in which various actual values of a welding process are detected by various sensing means and a welding wire displacement is sensed by a measuring system in the welding torch, in particular upstream of a contact pipe and/or by means of a measuring system disposed between a drive system for the welding wire feed and a linking element for a supply line or a hose pack, and the detected actual values and the detected welding wire displacement are used to control and/or regulate the welding process, **characterised in that** the welding wire displacement is detected in such a way that a surface structure of the welding wire is detected and stored by the measuring system and after a predefined measuring cycle time has elapsed the surface structure of the welding wire is detected again, after which the detected surface structures are compared by an evaluation logic of the measuring system and a corresponding shift in the surface structures is recognised and detected, whereupon a travelled distance or a changed position and/or a speed of the welding wire is calculated.

20. Method as claimed in claim 19, **characterised in that** the forward feed motion is detected by the measuring system and an optical receiver acts on a sensor which detects a roughness or the surface structure of the object, in particular of the workpiece and/or the welding wire, in multiple dimensions and stores it as a digital pattern, for which purpose the object, in particular the welding wire and/or the workpiece, is illuminated by a light source of the measuring system, in particular a controlled light source.

21. Method as claimed in claim 19 or 20, **characterised in that** the surface structure of the object, in particular the workpiece and/or the welding wire, is detected by the measuring system again once a predefined measuring cycle time has elapsed, whereupon an evaluation logic in the sensor compares a first detected pattern with a digitally stored pattern so as to detect a shift in the pattern and calculates from this the distance travelled or a changed position and/or a rate of shift in the pattern.

22. Method as claimed in one or more of claims 19 to 21, **characterised in that** the object to be measured, in particular the welding wire and/or the workpiece, is illuminated by the controlled light source so that the roughness or surface structures of the object produce a measurable contrast.

23. Method as claimed in one or more of claims 19 to 22, **characterised in that** distinctive points or regions are defined by the sensor during evaluation of the first stored pattern, for which corresponding coordinates are fixed, and, when the next pattern is detected, the measuring system recognises that there has been a shift in the pattern, particularly in the defined points or regions, and detects the changed positions of the coordinates as a cumulated travel distance.

24. Method as claimed in one or more of claims 19 to 23, **characterised in that** the resultant cumulated change in distance is used to determine the total distance travelled which is stored in a table with a time stamp.

25. Method as claimed in one of claims 19 to 24, **characterised in that** the speed and the quantity of welding wire transported are detected as an instantaneous or effective actual value.

26. Method as claimed in one or more of claims 19 to 25, **characterised in that** the detected distance travelled or position and/or speed of the monitored object is forwarded by the measuring system via lines, in particular via a field bus, to the control system of the welding apparatus.

27. Method as claimed in one or more of claims 19 to 26, **characterised in that** a distance measurement of a wire displacement and its derived values based on time differential, such as a speed, an acceleration or a jolt of the welding wire, is run or calculated by the measuring system.

28. Method as claimed in one or more of claims 19 to 27, **characterised in that** a measurement of a welding torch displacement and its derived values based on time differential, such as a speed, an acceleration or a jolt of the welding torch, above the workpiece is also run or calculated by the measuring system.

29. Method as claimed in one or more of claims 19 to 28, **characterised in that** the actual amount of welding wire fed along is detected or calculated by the control system of the welding apparatus on the basis of the data transmitted by the measuring system.

30. Method as claimed in one or more of claims 19 to 29, **characterised in that** corrections are run or applied to the welding parameters by the control system during a welding process on the basis of the data from the measuring system.

31. Method as claimed in one or more of claims 19 to 30, **characterised in that** the control system detects any slipping of the driving gears on the basis of the data of the measuring system correlated with the data from the drive system, in particular the feed motor voltage and/or the feed motor transmitter values.

32. Method as claimed in one or more of claims 19 to 31, **characterised in that** any twisting or impacts of the welding wire as it is fed towards the contact pipe and the forced contact in the contact pipe are monitored and detected by the measuring system.

33. Method as claimed in one or more of claims 19 to 32, **characterised in that** the contrast for detecting flaking or rust or a material of the welding wire is monitored by the measuring system.

34. Method as claimed in one or more of claims 19 to 33, **characterised in that** the controlled light source and the optical receiver are directed towards the welding wire as it is fed past.

35. Method as claimed in one or more of claims 19 to 34, **characterised in that** the motion of the welding torch towards the workpiece is sensed and evaluated by the measuring system without contact.

36. Method as claimed in one or more of claims 19 to 35, **characterised in that** the measuring system, a light source and an optical receiver are also directed onto the surface of the workpiece during a welding process.

## Revendications

1. Appareil de soudage (1), qui présente une source de courant (2) pour la mise à disposition d'énergie électrique à au moins une électrode à un chalumeau (10) et un dispositif de commande (4) associé à la source de courant (2), auquel est associé un dispositif d'entrée pour le réglage de paramètres de soudage différents, où pour la détection de différentes valeurs réelles d'un processus de soudage, plusieurs moyens de détection sont disposés, et un système de mesure (31) est disposé dans le chalumeau (10), en particulier en amont d'un tuyau de contact (42) et/ou un système de mesure (31) est disposé entre un système d'entraînement (28) pour le convoyage du fil d'apport et un élément de liage (30) d'une ligne d'alimentation (12) respectivement d'un paquet de tuyaux (23), **caractérisé en ce que** le système de mesure (31) est constitué d'une source de lumière (32), en particulier d'une source de lumière commandée (32) et d'un dispositif de réception optique (33) qui agit sur un capteur (34), et que le système de mesure (31) est réalisé pour la détection d'une structure de surface d'un fil d'apport (13) pour la détection d'un mouvement du fil d'apport, où le capteur (34) détecte une rugosité respectivement une structure de surface du fil d'apport (13) en plusieurs dimensions et la stocke comme modèle numérique, et que le système de mesure (3 1) est réalisé pour détecter à nouveau la surface du fil d'apport (13) après le déroulement d'une durée de cycle de mesure prédéfinie, où une logique d'évaluation est prévue pour comparer le modèle détecté en dernier avec le modèle numérique stocké, et la logique d'évaluation est réalisée pour détecter un déplacement des modèles et pour calculer un chemin respectivement une position modifiée et/ou une vitesse du fil d'apport.

2. Appareil de soudage selon la revendication 1, **caractérisé en ce que** la source de lumière commandée (32) est disposée de façon qu'un éclairage des rugosités respectivement des structures de la surface de l'objet produit un contraste apte à être mesuré.

3. Appareil de soudage selon la revendication 1 ou 2, **caractérisé en ce que** le capteur (34), en particulier la logique d'évaluation, lors de l'évaluation du premier modèle stocké, définit des points respectivement zones marquantes et fixe pour ceux-ci des coordonnées correspondantes après quoi celui-ci, après la détection du modèle suivant, reconnaît un déplacement du modèle, en particulier des points respectivement des zones définies et détecte, par cumulation, les positions modifiées des coordonnées comme chemin.

4. Appareil de soudage selon l'une ou plusieurs des revendications précédentes, **caractérisé en ce que** le capteur (34), en particulier la logique d'évaluation, est réalisé pour déterminer un chemin total à partir des modifications de chemin cumulées obtenues respectivement pour le stockage des modifications de chemin cumulées obtenues dans un tableau avec dateur automatique.

5. Appareil de soudage selon l'une ou plusieurs des revendications précédentes, **caractérisé en ce que** le capteur (34), en particulier la logique d'évaluation, est réalisé pour détecter la vitesse et la quantité convoyée du fil d'apport (13) comme valeur réelle effective.

6. Appareil de soudage selon l'une ou plusieurs des revendications précédentes, **caractérisé en ce que** le système de mesure (31) pour transmettre le chemin déterminé respectivement la position et/ou la vitesse de l'objet surveillé est relié par des lignes, en particulier par un bus de champ, au dispositif de commande (4) de l'appareil de soudage (1).

7. Appareil de soudage selon l'une ou plusieurs des revendications précédentes, **caractérisé en ce que** le système de mesure (31) est réalisé pour exécuter une mesure de trajet de poussée de fil et pour calculer les écarts différentiels dans le temps de celle-ci, comme par exemple une vitesse et/ou une accélération et/ou une secousse du fil d'apport (13).

8. Appareil de soudage selon l'une ou plusieurs des revendications précédentes, **caractérisé en ce que** le système de mesure (31) est également réalisé pour exécuter une mesure de trajet de déplacement du chalumeau et pour calculer les écarts dans le temps de celle-ci, comme par exemple une vitesse et/ou une accélération et/ou une secousse du chalumeau (10) sur la pièce (16).

9. Appareil de soudage selon l'une ou plusieurs des revendications précédentes, **caractérisé en ce que** le dispositif de commande (4) de l'appareil de soudage (1) est réalisé pour déterminer respectivement calculer la quantité réellement convoyée de fil d'apport (13) par les données transmises par le système de mesure (31).

10. Appareil de soudage selon l'une ou plusieurs des revendications précédentes, **caractérisé en ce que** le dispositif de commande (4) procède à une adaptation d'au moins un paramètre de soudage pendant un processus de soudage sur la base des données du système de mesure (31).

11. Appareil de soudage selon l'une ou plusieurs des revendications précédentes, **caractérisé en ce que** le dispositif de commande (4) est réalisé de façon à reconnaître un glissement des roues d'entraînement (28) par un couplage des données du système de mesure (31) avec les données du système d'entraînement (28), en particulier de la tension du moteur de poussée et/ou des valeurs de transmission du moteur de poussée.

12. Appareil de soudage selon l'une ou plusieurs des revendications précédentes, **caractérisé en ce que** le système de mesure (31) est réalisé pour surveiller respectivement déterminer un bouclage et une frappe du fil d'apport (13) lors de l'amenée au tuyau de contact (42) et d'un contact forcé dans le tuyau de contact (42).

13. Appareil de soudage selon l'une ou plusieurs des revendications précédentes, **caractérisé en ce que** le système de mesure (31), en particulier la logique d'évaluation, est réalisé en vue d'une surveillance du contraste pour la détection d'une croûte d'oxyde ou de rouille ou d'un matériau du fil d'apport (13).

14. Appareil de soudage selon l'une ou plusieurs des revendications précédentes, **caractérisé en ce qu'**un dispositif de guidage (35) présente un perçage de guidage (36) pour le fil d'apport (13).

15. Appareil de soudage selon l'une ou plusieurs des revendications précédentes, **caractérisé en ce que** le dispositif de guidage (35) présente une ouverture (37) qui s'étend jusqu'au perçage de guidage (36) par laquelle le système de mesure (31) est dirigé vers le fil d'apport (13).

16. Appareil de soudage selon l'une ou plusieurs des revendications précédentes, **caractérisé en ce que** la source de lumière commandée (32) ainsi que le dispositif de réception optique (33) sont dirigés en direction du fil d'apport (13) qui passe devant eux.

17. Appareil de soudage selon l'une ou plusieurs des revendications précédentes, **caractérisé en ce que** le système de mesure (31) est également réalisé pour la détection sans contact et l'évaluation du mouvement du chalumeau (10) vers la pièce (16).

18. Appareil de soudage selon l'une ou plusieurs des revendications précédentes, **caractérisé en ce que** le système de mesure (31) est disposé au chalumeau (10) de façon qu'une source de lumière et un dispositif de réception optique soient dirigés lors d'un processus de soudage également vers la surface de la pièce (16).

19. Procédé de commande et/ou de réglage d'un appareil de soudage, dans lequel par plusieurs moyens de détection, différentes valeurs réelles d'un processus de soudage sont détectées, et par un système de mesure dans le chalumeau, en particulier en amont d'un tuyau de contact, et/ou par un système de mesure entre un système d'entraînement pour le convoyage du fil d'apport et un élément de liage pour une ligne d'alimentation respectivement un paquet de tuyaux, un mouvement du fil d'apport est détecté, et les valeurs réelles détectées et le mouvement de fil d'apport détecté sont utilisés pour la commande et/ou le réglage du processus de soudage, **caractérisé en ce qu'**une détection du mouvement du fil d'apport a lieu de telle sorte que par le système de mesure, une détection et un stockage d'une structure de surface du fil d'apport sont réalisés, après quoi, après une durée de cycle de mesure prédéfinie, la détection de la structure de surface du fil d'apport est répétée et ensuite, par une logique d'évaluation du système de mesure, les structures de surface détectées sont comparées, et un déplacement correspondant des structures de surface est reconnu respectivement déterminé, et ensuite un calcul d'un trajet respectivement d'une position modifiée et/ou d'une vitesse du fil d'apport est effectué.

20. Procédé selon la revendication 19, **caractérisé en ce que** la détection du mouvement de poussée est effectuée par le système de mesure, en agissant par un dispositif optique sur un capteur par lequel est détectée une rugosité respectivement la structure de surface de l'objet, en particulier de la pièce et/ou du fil d'apport, en plusieurs dimensions et est stockée comme modèle numérique, et à cette fin, l'objet, en particulier le fil d'apport et/ou la pièce est éclairé par une source de lumière du système de mesure, en particulier par une source de lumière commandée.

21. Procédé selon la revendication 19 ou 20, **caractérisé en ce que** par le système de mesure, après l'écoulement d'une durée de cycle de mesure prédéfinie, de nouveau une détection de la structure de surface de l'objet, en particulier de la pièce et/ou du fil d'apport est exécutée, où par une logique d'évaluation dans le capteur, un modèle détecté en dernier est comparé à un modèle numérique stocké, un déplacement des modèles est détecté et, à partir de celui-ci, le trajet respectivement une position modifiée et/ou une vitesse du déplacement des modèles est calculée.

22. Procédé selon l'une ou plusieurs des revendications 19 à 21, **caractérisé en ce que** l'objet à mesurer, en particulier le fil d'apport et/ou la pièce est éclairé par la source de lumière commandée de façon que les rugosités respectivement les structures de la surface de l'objet produisent un contraste mesurable.

23. Procédé selon l'une ou plusieurs des revendications 19 à 22, **caractérisé en ce que** par le capteur, lors de l'évaluation du premier modèle stocké, des points respectivement zones marquantes sont définis et pour ceux-ci des coordonnées correspondantes sont fixées, et après la détection du modèle suivant, le système de mesure reconnaît un déplacement du modèle, en particulier des points ou zones définis, et les positions modifiées des coordonnées sont détectées par cumulation comme trajet.

24. Procédé selon l'une ou plusieurs des revendications 19 à 23, **caractérisé en ce que** la modification de trajet cumulée obtenue est utilisée pour déterminer le trajet total respectivement est stockée dans un tableau avec dateur automatique.

25. Procédé selon l'une ou plusieurs des revendications 19 à 24, **caractérisé en ce que** la vitesse et la quantité convoyée du fil d'apport est détectée comme valeur réelle effective.

26. Procédé selon l'une ou plusieurs des revendications 19 à 25, **caractérisé en ce que** le trajet déterminé respectivement la position et/ou la vitesse de l'objet surveillé par le système de mesure sont transmis par des lignes, en particulier par un bus de champ, au dispositif de commande de l'appareil de soudage.

27. Procédé selon l'une ou plusieurs des revendications 19 à 26, **caractérisé en ce que** la mesure de trajet de poussée de fil et les écarts différentiels dans le temps de celle-ci, comme par exemple une vitesse, une accélération ou une secousse du fil d'apport sont exécutés respectivement calculés par le système de mesure.

28. Procédé selon l'une ou plusieurs des revendications 19 à 27, **caractérisé en ce qu'**aussi une mesure de trajet de déplacement de fil d'apport et les modifications dans le temps de celle-ci, comme par exemple une vitesse, une accélération ou une secousse du fil d'apport, sont exécutées respectivement calculées sur la pièce par le système de mesure.

29. Procédé selon l'une ou plusieurs des revendications 19 à 28, **caractérisé en ce qu'**au moyen des données transmises du système de mesure, la quantité convoyée réellement du fil d'apport est déterminée respectivement calculée par le dispositif de commande de l'appareil de soudage.

30. Procédé selon l'une ou plusieurs des revendications 19 à 29, **caractérisé en ce que** sur la base des données du système de mesure, une adaptation des paramètres de soudage est effectuée respectivement exécutée pendant un processus de soudage par le dispositif de commande.

31. Procédé selon l'une ou plusieurs des revendications 19 à 30, **caractérisé en ce que** par le couplage des données du système de mesure avec les données du système d'entraînement, en particulier de la tension du moteur de poussée et/ou des valeurs d'émission du moteur de poussée, le glissement des roues d'entraînement est détecté par le dispositif de commande.

32. Procédé selon l'une ou plusieurs des revendications 19 à 31, **caractérisé en ce qu'**un bouclage et un cognement du fil d'apport, lors de l'amenée au tuyau de contact ainsi que le contact forcé dans le tuyau de contact est surveillé respectivement déterminé par le système de mesure.

33. Procédé selon l'une ou plusieurs des revendications 19 à 32, **caractérisé en ce qu'**une surveillance du contraste est effectuée pour reconnaître la croûte d'oxyde respectivement la rouille ou un matériau du fil d'apport par le système de mesure.

34. Procédé selon l'une ou plusieurs des revendications 19 à 33, **caractérisé en ce que** la source de lumière commandée ainsi que le dispositif de réception optique sont dirigés en direction du fil d'apport passant devant eux.

35. Procédé selon l'une ou plusieurs des revendications 19 à 34, **caractérisé en ce que** le déplacement du chalumeau vers la pièce est détecté sans contact par le système de mesure et est évalué.

36. Procédé selon l'une ou plusieurs des revendications 19 à 35, **caractérisé en ce que** le système de mesure, une source de lumière et un dispositif de réception optique sont dirigés lors d'un processus de soudage également sur la surface de la pièce.
